# EUROPÄISCHE PATENTSCHRIFT

(11) **EP 3 130 214 B1**
(45) Veröffentlichungstag und Bekanntmachung des Hinweises auf die Patenterteilung: **26.02.2020**
(21) Anmeldenummer: 16001635.8
(22) Anmeldetag: 26.07.2016
(51) Int. Cl.: A01D 43/08, A01D 45/02

(54) **MÄH- UND FÖRDERGERÄT ZUM ERNTEN VON STÄNGELIGEM ERNTEGUT**
MOWING AND CONVEYOR APPARATUS FOR HARVESTING STALK CROPS
FAUCHEUSE DESTINÉE À TRANSPORTER ET À CUEILLIR DES PRODUITS DE RÉCOLTE À TIGES

(30) Priorität: 12.08.2015 DE 102015010222
(43) Veröffentlichungstag der Anmeldung: 15.02.2017
(73) Patentinhaber: Maschinenfabrik Bernard Krone GmbH & Co. KG, 48480 Spelle (DE)
(72) Erfinder: Horstmann, Josef, 49479 Ibbenbüren (DE); Ahlmer, Frank, 49492 Westerkappeln (DE); Ester, Markus, 49832 Beesten (DE); Mösker, Markus, 48480 Spelle (DE); Zimmermann, Michael, 49451 Holdorf (DE)

(56) Entgegenhaltungen:
- DE-A1- 19 951 459
- DE-A1-102009 058 995
- DE-A1-102011 118 207
- DE-A1-102013 004 859

## Beschreibung

Die Erfindung betrifft ein Mäh- und Fördergerät zum Ernten von stängeligem Erntegut nach dem Oberbegriff des Anspruchs 1.

Aus der DE 199 51 459 A1 des Anmelders ist ein gattungsgemäßes Mäh- und Fördergerät bekannt, welches dazu geeignet ist als Vorsatzgerät an einem Feldhäcksler zur reihenunabhängigen Ernte von stängeligem Erntegut, wie insbesondere Mais, eingesetzt zu werden. Das Erntegerät weist Schneidscheiben in der Art von Sägeblättern auf, durch die die Erntegutstängel für eine sichere Aufnahme erst dann erfasst und abgetrennt werden, nachdem diese bereits von den Mitnehmern der Fördereinrichtung aufgenommen wurden. Durch die dadurch auftretenden Spannungen in den Stängeln kann es nachteilig zu unkontrollierten Schnitten und Pflanzenverlusten kommen. Weitere, allgemein bekannte, gattungsgemäße Erntegeräte weisen insbesondere in Verbindung mit Fördertrommeln rotierende Schneidscheiben auf, welche im Zusammenwirken mit feststehenden Gegenmessern die Erntegutstängel zumindest anschneiden bevor diese von den Förderelementen erfasst werden. Die zuvor genannten Probleme werden dadurch gemindert, jedoch bedeutet eine derartige Ausführung einen erheblichen konstruktiven Mehraufwand und erhöhten Verschleiß und Empfindlichkeit gegenüber Fremdkörpern.

Demgemäß ist es Aufgabe der vorliegenden Erfindung, ein Mäh- und Fördergerät zu schaffen, bei dem die genannten Nachteile vermieden werden und bei einfachster Bauweise ein sicherer Schnitt und eine verlustfreie Aufnahme der Erntegutstängel gewährleistet ist.

Die Aufgabe wird durch die Merkmale des Anspruchs 1 gelöst.

Bisher bekannte Schneidscheiben üben während und nach dem Abtrennen auf den Erntegutstängel eine große tangentiale Kraft aus, wodurch der Stängel in Drehrichtung der Schneidscheibe unkontrolliert tangential abgefördert wird und eventuell nicht ordnungsgemäß von der Fördereinrichtung aufgenommen werden kann. Insbesondere die breiten Schneiden sägeblattartiger Schneidscheiben, welche einen Teil der Pflanzenstängel regelrecht zerspanen, verstärken den tangentialen Impuls auf die Stängel ebenso wie geschränkte Schneiden und schräg angestellte Schneidscheiben. Deshalb musste man bisher die negativen Einflüsse von zusätzlichen Stängelführungs- und Halteelementen und einer vorzeitigen Aufnahme der Erntegutstängel durch Förderelemente in Kauf nehmen.

Die Ausgestaltung der Schneidscheiben des erfindungsgemäßen Mäh- und Fördergeräts ermöglicht es erstmals diesen zuvor beschriebenen tangentialen Impuls auf die Erntegutstängel zu minimieren und dadurch die Stängel im freien Schnitt, ohne die Haltewirkung von Gegenschneiden und/oder anderen Halte- und Führungseinrichtungen abzutrennen oder zumindest anzuschneiden bevor sie von Förderelementen erfasst werden.

Die Schneidscheiben weisen dazu gleichmäßig am Außenumfang verteilte Schneiden auf, die jeweils wie Sicheln nach innen zur Scheibenmitte hin konvex ausgeformt sind und in Drehrichtung der Schneidscheibe weisend mit einer Spitze auslaufen. Die Außenkontur der sichelförmigen Schneiden ist dabei ebenfalls bogenförmig angeformt und folgt nicht dem Scheibenaußendurchmesser. Somit läuft die sichelförmige Schneide theoretisch in einer senkrechten Linie mit der Länge der Scheibenstärke am Umlaufdurchmesser der Schneidscheiben aus.

In einer besonders vorteilhaften Ausführungsform wird durch einen Anschliff der Schneide an ihrer konvexen Innenseite eine scharfe Schneidkante geschaffen, welche die Schneidenspitze theoretisch auf einen Punkt reduziert. Aus Gründen der Standfestigkeit ist es in der Praxis sinnvoll die Spitze etwas zu entschärfen aber somit ist eine Schneidscheibe mit Schneiden bereitgestellt, die die Erntegutstängel durch die Schneidengeometrie nicht durch zerspanen abtrennt oder einfach abschlägt sondern mit geringem Leistungsaufwand durch ihre Schärfe abschneidet. Das Schnittgut wird von den sichelförmigen Schneiden förmlich eingefangen, um dann in einem sauberen Schnitt abgetrennt zu werden.

Durch die besonders erfinderische Anordnung des Schneidenanschliffs an der Unterseite der Schneidscheiben wird insbesondere die Minimierung des unerwünschten tangentialen Impulses auf die Erntegutstängel erreicht, Aber diese Ausführung bringt noch weitere Vorteile mit sich.

So weisen die abgeschnittenen Stängel dadurch eine glatte Schnittfläche auf, die auf der rotierenden Schneidscheibe mit geringem Widerstand gleitet, wodurch der Stängel durch den Impuls der Fahrgeschwindigkeit entgegen der Fahrtrichtung in den Förderbereich gelangt und dort kontrolliert von den Förderelementen der Fördereinrichtung erfasst und sicher abgefördert wird. Die tangentiale Förderwirkung auf das Schnittgut, den die Schneidenschrägen bei einem Anschliff von der Oberseite der Schneidscheiben bewirken würden wird somit geschickt vermieden.

Des Weiteren verursachen die Schneidenschrägen an den Unterseiten der Schneidscheiben eine unsaubere, aufgefaserte Schnittfläche an den Erntegutstoppeln. Dieser erwünschte Effekt begünstigt eine schnelle Verrottung der Stoppeln und nimmt eventuellen Schädlingen den Überlebensraum.

Ein weiterer positiver Nebeneffekt des unteren Anschliffs der im Verhältnis zu Sägeblatt ähnlichen Schneidscheiben sehr großen Schneiden ist der Ventilatoreffekt der Schneidscheiben. Die mit hoher Drehzahl rotierenden Schneidscheiben erzeugen einen Luftstrom, der eine reinigende Wirkung auf Bauteile des Mäh- und Fördergerätes hat. Insbesondere Ablagerungen von Pflanzenteilen an Halterungen von Pflanzenteilern werden so wirkungsvoll verhindert.

In einer besonders vorteilhaften Weiterbildung der Schneidscheiben werden diese mit zusätzlichen Öffnungen in ihrem scheibenförmigen Mittelbereich zur Verstärkung des Ventilatoreffektes versehen. Gleichzeitig wird dadurch auch eine Gewichtsreduzierung erzielt.

Zur Erzielung der Vorteile der vorliegenden Erfindung ist es unerheblich ob das erfindungsgemäße Mäh- und Fördergerät eine oder mehrere Fördereinrichtungen aufweist, welche das Erntegut mittels eines umlaufenden Endlosförderers in bekannter Weise überwiegend quer abfördern, oder ob es sich um Trommelförderer handelt, durch die das Erntegut durch radiale Förderung weitergeleitet wird.

Durch die möglichst weit überlappende Anordnung der Schneidscheiben, quer zur Arbeitsrichtung über die gesamte Arbeitsbreite wird eine wellenförmige Schneidlinie erzielt, die einer Geraden möglichst nahe kommt.

Da das bevorzugte Erntegut, der Mais, in Reihen angebaut wird, ist durch Versuche als optimale Anzahl 2 oder 3 Mähscheiben pro Reihe ermittelt worden. Durch die Abstimmung des Achsabstandes der Mähscheiben auf den bevorzugten Reihenabstand als ganzzahligen Teiler, sind durch das Auftreffen der Reihen auf die Mähscheibenmitte optimale Schnittbedingungen gegeben.

Durch die besonders geschickte Anordnung der Schneidscheiben zu den Fördereinrichtungen ist mit dem Mäh- und Fördergerät nach der Erfindung selbstverständlich auch eine reihenunabhängige Ernte möglich.

Entscheidend ist dabei der optimale Abstand von der Schneidlinie zur Förderlinie. Die Förderlinie wird dabei in Fahrtrichtung hinter der Schneidlinie durch die Außenhüllbahn der Mitnehmerelemente gebildet. Als optimal ist in diversen Versuchen für die Maisernte ein Abstand ermittelt worden, der in etwa dem mittleren Durchmesser eines Maisstängels von 40 mm entspricht. So ist gewährleistet, das die Stängel unbeeinflusst von Mitnehmern der Fördereinrichtungen, frei stehend spannungsfrei abgeschnitten werden um dann in kontrollierter Aufnahmeposition in den Förderbereich entgegen der Fahrtrichtung zu gelangen und dort von den Fördereinrichtungen erfasst und abgefördert zu werden.

Besonders vorteilhaft unterstützend für den Fluss der Erntegutstängel in Längsrichtung entgegen der Fahrt- und Arbeitsrichtung wirkt sich die Ausrichtung der Schneidscheiben aus. Damit die Erntegutstängel während ihres freien Flusses in Richtung der Fördereinrichtung keinen vertikalen Anstieg überwinden müssen, der durch die Rotation der Schneidscheibe wiederum eine vertikale Kraftkomponente ausüben würde, ist es erfindungsgemäß wichtig, dass die Schneidscheiben möglichst parallel zum Erdboden ausgerichtet sind.

Für eine verbesserte Aufnahme und Förderung der Pflanzen durch die Fördereinrichtungen, weisen die in mehreren Ebenen übereinander angeordneten Förderelemente eine unterschiedliche, optimierte Außenkontur auf die die Förderelemente in einen Annahmeabschnitt und einen Förderabschnitt unterteilt.

Ein optimaler freier Schnitt der Erntgutstängel, die verlustfreie Aufnahme durch die Fördereinrichtung und eine kontrollierte, gleichmäßige Förderung sind so nur durch die Merkmale des Mäh- und Fördergerätes gemäß der Erfindung möglich.

Die Erfindung wird im Folgenden unter Hinweis auf die beigefügten Figuren näher erläutert. Daraus ergeben sich auch weitere Einzelheiten und Vorteile der Erfindung. Es zeigen:
**Fig. 1** eine perspektivische Ansicht eines Mäh- und Fördergerätes nach der Erfindung;
**Fig. 2** eine Detailansicht X aus Fig. 1;
**Fig. 3** eine Einzeldarstellung einer Schneidscheibe des Ausführungsbeispiels eines erfindungsgemäßen Mäh- und Fördergerätes nach Fig. 1;
**Fig. 4** eine Prinzipdarstellung der Zuordnung Schneid- zu Fördereinrichtung in einer ersten Ausführung;
**Fig. 5** eine Prinzipdarstellung der Zuordnung Schneid- zu Fördereinrichtung entsprechend Fig. 4 in einer weiteren Ausführung;
**Fig. 6** eine Detailansicht einer Fördereinrichtung des Mäh- und Fördergerätes nach Fig. 1 in einer Ansicht von unten, wobei nicht relevante Bauteile entfernt sind.

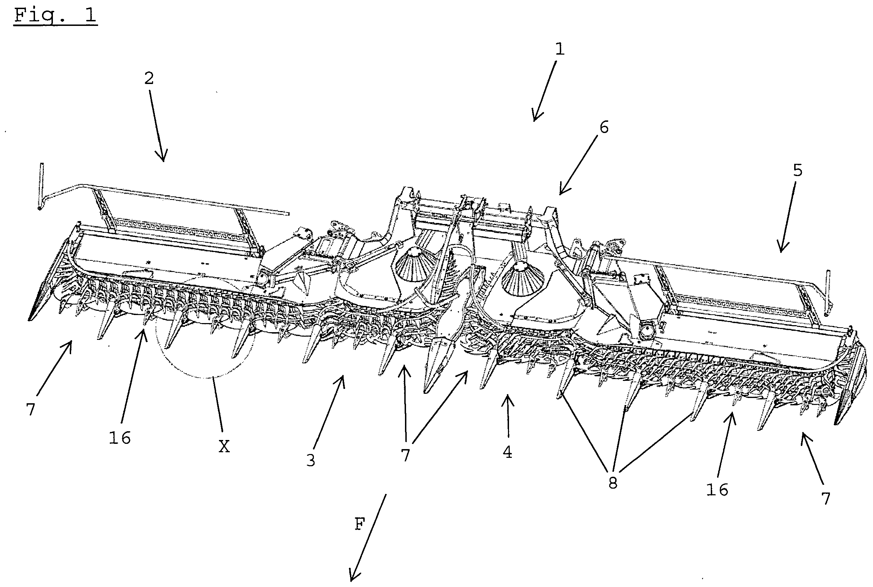

Das in Fig. 1 dargestellte Ausführungsbeispiel eines nach den Erfindungsmerkmalen gestalteten Mäh- und Fördergerätes 1 kann als Vorsatzgerät für eine mobile Verarbeitungseinrichtung in der Art eines Feldhäckslers zum reihenunabhängigen Ernten von stängelartigem Erntegut, wie Mais oder dergleichen, eingesetzt werden. Das Erntegerät 1 besteht aus vier, in der längsten Ausrichtung quer zur Fahrt- und Arbeitsrichtung F ausgerichteten, zueinander spiegelbildlich ausgeführten Schneid- und Fördereinrichtungen 2,3,4,5, die so nebeneinander angeordnet sind, dass ein durchgehender Erntegutstreifen mit großer Arbeitsbreite abgeerntet werden kann. Zur Aufhängung des Erntegerätes 1 an einer Verarbeitungsvorrichtung ist ein Tragrahmen 6 vorgesehen, an dem die mittleren Schneid- und Fördereinrichtungen 3, 4 fest angeordnet sind und die weiteren Schneid- und Fördereinrichtungen 2, 5 über Gelenke schwenkbeweglich mit diesen verbunden sind. So können die Schneid- und Fördereinrichtungen 2, 5 aus der in Fig. 1 dargestellten Arbeits- und Betriebsstellung in eine Transportstellung überführt werden, in der sie eine etwa parallel zueinander ausgerichtete, auf die mittleren Schneid- und Fördereinrichtungen 2,3 geklappte Stellung mit einer geringen Transportbreite einnehmen.

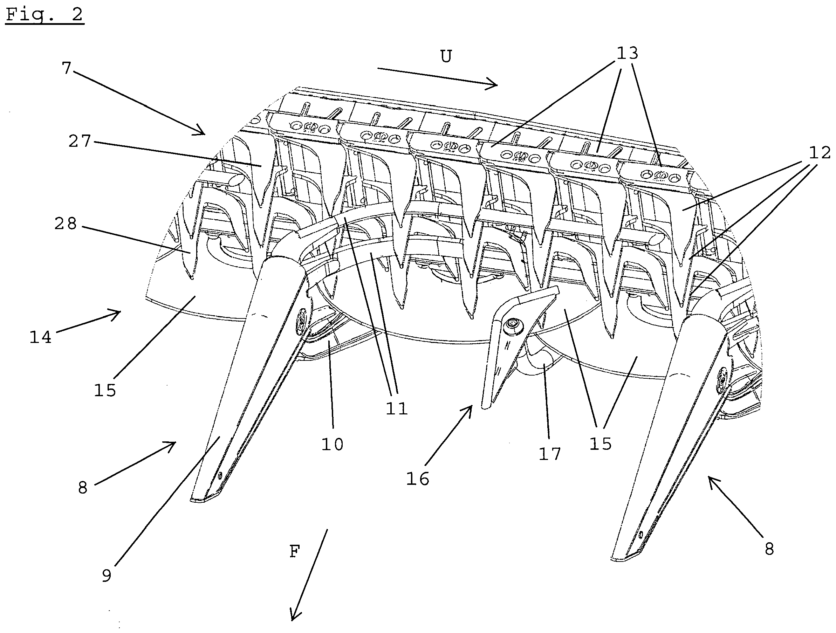

Das Erntegerät 1 hat in dem gezeigten Ausführungsbeispiel für jede Schneid- und Fördereinrichtung 2-5 jeweils einen umlaufenden Endlosförderer 7. Die Förderrichtung der Endlosförderer 7 verläuft in etwa quer zur Fahrt- und Arbeitsrichtung F und ist zur Mitte des Erntegerätes 1 hin gerichtet.
Wie weiterhin den Fig. 1 und 2 zu entnehmen ist, weist jede Schneid- und Fördereinrichtung 2 - 5 zum einen zur Erleichterung der Ernte von liegendem, oder teilweise liegendem, stängelartigen Erntegut und zum anderen zur Unterstützung der Endlosförderer 7 bei der Zuführung des stängelartigen Erntegutes an die Verarbeitungseinrichtung Blatt- und Pflanzenheber 8 auf, welche im wesentlichen aus einer etwa pyramidenförmigen Teilerspitze 9, den Haltern 10 und Führungsbügeln 11 bestehen.

Wie insbesondere auch aus Fig. 2 näher hervorgeht, bestehen die Endlosförderer 7 des Ausführungsbeispiels im wesentlichen aus einer Vielzahl aneinandergereihter mit auf 3 Ebenen mit Förderelementen 12 bestückten Förder- und Führungsgliedern 13, welche ein flexibles Fördersystem darstellen, das entlang unterschiedlicher Bewegungsbahnen geführt sein kann. Im dargestellten Ausführungsbeispiel werden die Förder- und Führungsglieder 13 der Endlosförderer 7 insbesondere bei den Schneid- und Fördereinrichtungen 2,5 im Arbeitstrumm entlang einer geradlinig ausgeführten Bewegungsbahn geführt. Zudem sind an den Schneid- und Fördereinrichtungen 2-5 Schneideinrichtungen 14 in der Form von Schneidscheiben 15 vorgesehen, die unterhalb der Bewegungsbahn der Endlosförderer eine Schneidebene bilden. In der Detaildarstellung der Figur 2 sind die Schneidscheiben 15 zur besseren Erkennbarkeit nur schematisch als geschlossene Scheiben dargestellt. So ist besonders deutlich die überlappende Anordnung der Schneidscheiben 15 in zwei Ebenen erkennbar.
Des Weiteren sind in Fig. 2 Abweiselemente 16 im Zwickelbereich der Schneidscheiben 15 gezeigt, die in der gleichen Weise wie die Blatt- und Pflanzenheber 8 durch Halter 17 befestigt sind, welche unterhalb der Schneideinrichtungen 14 zu ihrem nicht dargestellten Befestigungspunkt am Grundrahmen der Schneid- und Fördereinrichtung führen. Auf die Bedeutung der Abweiselemente 16 wird später noch eingegangen.

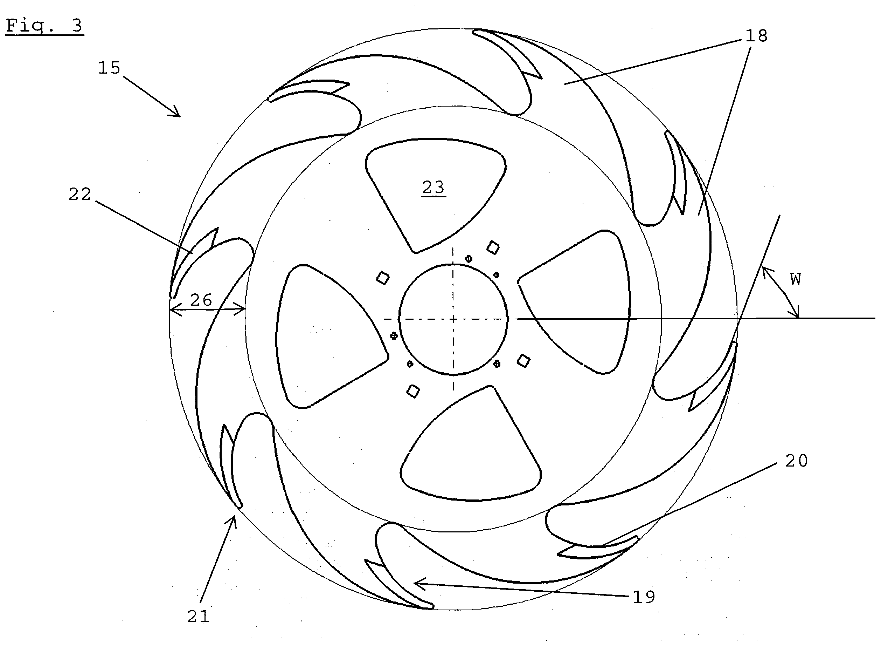

Fig. 3 zeigt in Draufsicht eine bevorzugte Ausführungsform einer Schneidscheibe 15 des erfindungsgemäßen Mäh- und Fördergeräts 1. Die Schneidscheibe 15 weist ähnlich einem Kreissägeblatt am Umfang Zähne auf, die jedoch als Besonderheit als sichelförmige Schneiden 18 ausgebildet sind. Um einen sauberen Schnitt mit möglichst geringem Leistungsaufwand zu erzielen, hat sich die Sichelform der Schneiden 15 als besonders vorteilhaft erwiesen. Das Schnittgut wird durch die spitze Form der Schneide 15 sauber geschnitten und nicht abgeschlagen. Je größer dabei der Schneidenwinkel W ausgeführt ist, desto geringer sind die Schnittkräfte. In Abhängigkeit vom Einsatzzweck und dem Schnittgut sind jedoch Grenzen gesetzt, um eine ausreichende Standzeit der Schneiden 18 zu erzielen. Mittlere Winkel zwischen 40 und 75 Grad haben sich als geeignet erwiesen.

Zur Optimierung des Schneidverhaltens weisen die Schneiden 15 an ihren konkaven Innenseiten 19 einen nicht dargestellten schrägen Anschliff auf, wodurch eine scharfe Schneidkante 20 entsteht. Durch den Anschliff wird die Schneidenspitze 21, welche mit der Eindringfläche in die Erntegutstängel beim Schneidvorgang gleichzusetzen ist, theoretisch auf einen Punkt reduziert. Eine erhebliche Reduzierung der notwendigen Antriebsleitung ist eine Folge davon. Eine weitere Folge ist die erhebliche Reduzierung der tangentialen Krafteinflüsse auf das Schnittgut. Das stängelartige Erntegut verharrt während und nach dem Schnitt regelrecht in seiner Position und wird zudem durch die konkave Sichelform der Schneide förmlich eingefangen und entgegengesetzt zur Fahrtrichtung F den Förderelementen 12 der Endlosförderer 7 zugeführt.

Durch die erfinderische Ausführung der Anschliffflächen der Schneiden an der Unterseite der Schneidscheiben 15 werden die zuvor beschriebenen positiven Effekte noch verstärkt.

In Fig. 3 ist der unterseitige, in Betriebstellung zum Erdboden weisende Anschliff der Schneiden 15 nicht sichtbar. Die abgegrenzt dargestellten Schneidenbereiche 22, sind Bereiche auf der Oberfläche der Schneidscheibe 15 die mit einer Hartstoffbeschichtung als Verschleißschutz versehen sind. Durch diese Beschichtung im Bereich der scharfen Schneidkanten 20, wird die Standzeit der sehr scharfen und spitzen Schneiden 18 erheblich verbessert. Bei Verschleiß der Schneidenunterseite tritt vorteilhaft ein Selbstschärfeffekt ein.

Ein weiteres vorteilhaftes Detail der Ausführungsform der dargestellten Schneidscheibe 15 ist der Fig. 3 ebenfalls deutlich zu entnehmen. Öffnungen 23 im mittleren Schneidscheibenbereich erzeugen im Arbeitsbetrieb eine Luftströmung die insbesondere im Bereich der Halter 10, 17 eine reinigende Wirkung haben und Ablagerungen von Pflanzenresten vermeiden. In einer weiteren vorteilhaften Ausführungsform werden die Schneidscheiben 15 an der Unterseite mit vorstehenden Räumelementen versehen, die den genannten Reinigungseffekt noch verstärken und zusätzlich die Erntegutstoppeln am oberen Ende zerfasern und so für eine schnellere Verrottung sorgen.

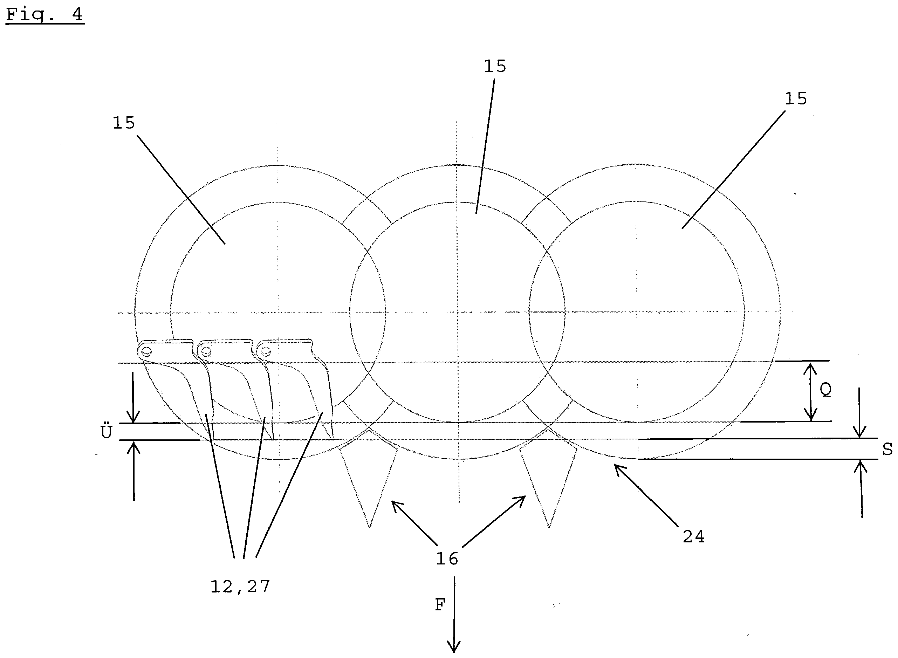

Fig. 4 zeigt in einer Draufsicht schematisch die räumliche Zuordnung der Schneideinrichtungen 14 zu den Fördereinrichtungen 7. Ein besonderes Merkmal des Mäh- und Fördergeräts 1 nach der Erfindung ist dabei der Schneidbereich S, der den Abstand von der vorderen Umlaufbahn der Schneiden 18 bis zur Umlaufbahn der Förderelemente 12 beschreibt. In diesem Bereich werden die auf die Schneidscheiben 15 treffenden Erntegutstängel von den rotierenden Schneiden 18 geschnitten, ohne das sie bereits von Förderelementen 12 erfasst werden. Erst im weiteren gekennzeichneten Übergabebereich Ü werden die zumindest angeschnittenen, beziehungsweise, wenn sie mittig auf die Schneidscheiben 15 treffen bereits komplett abgetrennten Erntegutstängel von Förderelementen 12 erfasst und weiter in den Querförderbereich Q aufgenommen und quer abgefördert.

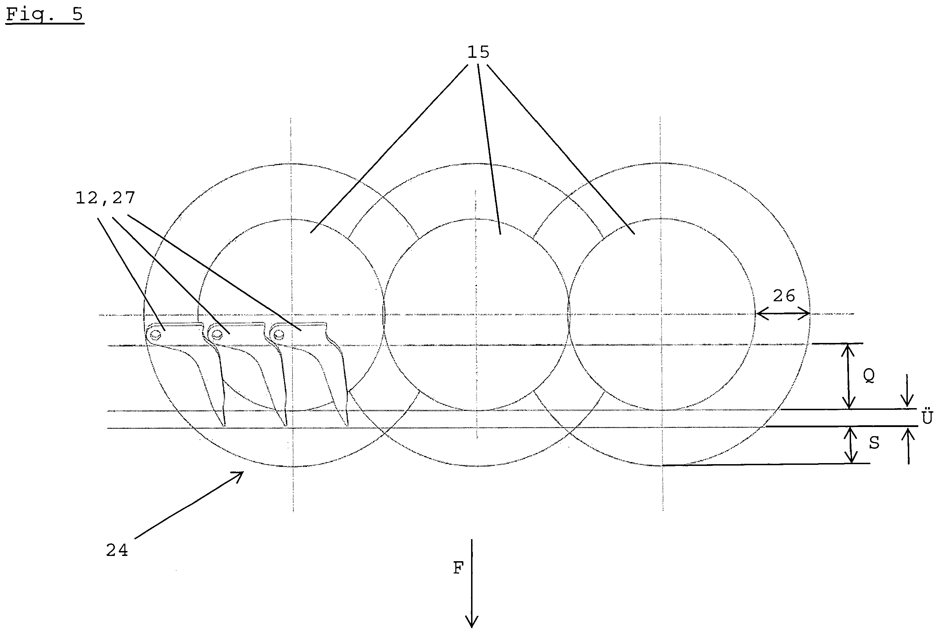

In der Regel herrschen bei normaler Erntefahrt optimale Bedingungen unter denen die Pflanzenreihen auf die Mitte der Schneidscheiben 15 auftreffen. Bei reihenunabhängiger Erntefahrt werden die Bedingungen etwas ungünstiger, da die Pflanzen dann eventuell in einem Bereich auf die Schneidscheiben 15 treffen, der bedingt durch die wellenförmige Schneidlinie 24 der Schneidscheiben einen wesentlich kleineren Schneidbereich S aufweist. Weil der Schneidbereich S bei der in Fig. 4 gezeigten Abstandskonstellation von Schneideinrichtung 14 zu Fördereinrichtung 7 im Zwickelbereich der Schneidscheiben 15, also dem Bereich in dem sich die Umlaufkreise der Schneiden 18 treffen, gar nicht mehr vorhanden ist, wird dieser Bereich trickreich mit einem Abweiselement 16 in Fahrtrichtung F abgedeckt. Somit können keine Pflanzen in dem Bereich der Schneidlinie 24 auf die Schneidscheiben auftreffen, in dem diese nicht vor der Förderlinie 25 liegt. Somit ist gewährleistet, dass die Erntegutstängel immer zumindest angeschnitten werden, bevor sie von Förderelementen 12 erfasst werden. Fig. 5 stellt ebenfalls eine schematische Ansicht entsprechend Fig. 4 in einer weiteren Ausführungsform der Erfindung dar.

Durch Verlagerung der Schneideinrichtungen 14 gegenüber den Fördereinrichtungen 7 in Fahrtrichtung F, wird bei der gezeigten Ausführung der Schneidbereich S so weit vergrößert, dass auch im Zwickelbereich der Schneidscheiben 15 noch ein Schneidbereich S vorhanden ist.

Durch diese konstruktive Ausgestaltung kann somit vorteilhaft auf Abweiselemente 16 verzichtet werden.

Durch den vergrößerten Schneidbereich S weisen die Schneidscheiben 15 dieser Ausführungsform eventuell auch entsprechend vergrößerte sichelförmige Schneiden 18 auf, da die radiale Erstreckung der Schneiden 18 an den Schneidscheiben 15 als Maß für die Schneidengröße 26 vorteilhafterweise dem Maß des Schneidbereichs S plus dem Maß des Übergabebereichs Ü entspricht.

Unabhängig von der Ausführungsform des Mäh- und Fördergeräts 1 liegt das Maß für den Schneidbereich S erfindungsgemäß vorteilhaft in einem Bereich von 10 bis 80 mm. Idealerweise wird das Maß S abhängig vom Stängeldurchmesser des zu erntenden Ernteguts angepasst. Bei einem Mäh- und Fördergerät, welches insbesondere für die Maisernte konstruiert ist, liegt das Maß für den Schneidbereich S deshalb vorzugsweise bei 40 mm, wenn man von einem mittleren Stängeldurchmesser von 40 mm ausgeht.

In einer weiteren, nicht dargestellten Ausführungsform eines Mäh- und Fördergeräts 1 nach der Erfindung ist eine variable Anpassung des Schneidbereichs S an das zu erntenden Erntegut oder auch an verschiedene Erntebedingungen denkbar.

Da der Antrieb der Schneidscheiben 15, wie in Fig. 2 erkennbar, von oben erfolgt und alle Schneidscheiben 15 einer Schneid- und Fördereinrichtung 2-5 durch ein geschlossenes Getriebe in der Art eines Mähholmes miteinander als Einheit verbunden sind, ist eine variable Anordnung zur jeweiligen Fördereinrichtung 7 auch konstruktiv einfach umsetzbar.

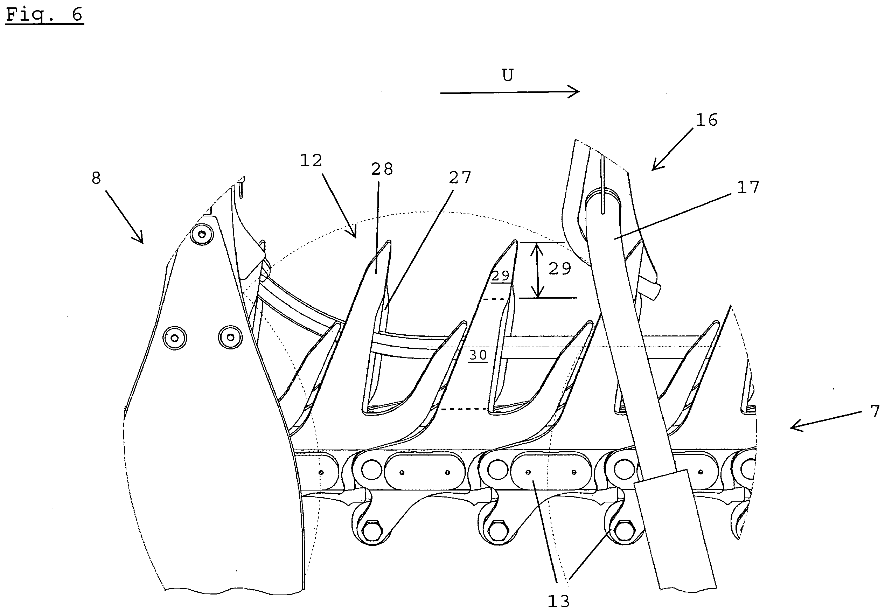

Eine weitere Anpassung, insbesondere an langstängeliges Erntegut betrifft die Förderelemente 12 der Fördereinrichtungen 7 und ist in Fig. 2 zu erkennen und durch die Ansicht in Fig. 6 weiter verdeutlicht.

Fig. 6 zeigt eine Teilansicht des erfindungsgemäßen Mäh- und Fördergeräts 1 von unten auf eine Fördereinrichtung 7. Zur besseren Erkennbarkeit sind die Schneideinrichtungen 14 entfernt. Die Umlaufdurchmesser der Schneidscheiben 15 sind gestrichelt angedeutet. In dieser Ansicht sind die in mehreren Ebenen angeordneten Förderelemente 12 deckungsgleich dargestellt. Dadurch wird deutlich, dass ihre in Förder- und Umlaufrichtung U weisende Längskante in der Kontur unterscheidet.

Der Fig. 2 ist dieses Merkmal ebenfalls zu entnehmen, aber durch die Perspektive nicht so eindeutig. Das vorteilhafte besondere Merkmal der oberen Förderelemente 27 und der unteren Förderelemente 28 der im Ausführungsbeispiel in drei Förderebenen angeordneten Förderelemente 12 ist deren Unterteilung in einen Annahmeabschnitt 29 und einen Förderabschnitt 30. Die Förderelemente 12 der mittleren Ebene haben eine neutrale Kontur. Die optimierte Kontur der Förderelemente 27, 28 in ihrem Annahmeabschnitt 29 erleichtert und unterstützt die Aufnahme der Erntegutstängel im in den Fig.4 und 5 verdeutlichten Übergabebereich Ü. Nach erfolgter Übernahme der Pflanzen in den Querförderbereich Q unterstützt die optimierte Kontur im Förderabschnitt 30 der Förderelemente 27, 28 die Förderung dahingehend, dass durch die in Förder- und Umlaufrichtung vorstehende Kontur des oberen Förderelements 27 und gegenüber dem mittleren Förderelement 12 zurückliegende Kontur des unteren Förderelements 28 die Erntegutstängel möglichst senkrecht gehalten werden und deren Abknicken, durch den deutlich über der Fördereinrichtung 7 liegenden Schwerpunkt entgegengewirkt wird.

Alle zuvor anhand eines Ausführungsbeispiels eines erfindungsgemäßen Mäh- und Fördergeräts 1 mit Fördereinrichtungen 7 in der Art als endlos umlaufende Förderkollektor genannten und beschriebenen Merkmale sind ebenso gleichwirkend auf erfindungsgemäße Mäh- und Fördergeräte 1 mit Fördereinrichtungen 7 in der Art von mit um eine Achse rotierenden Fördertrommeln übertragbar.

**Bezugszeichenliste:**

| | | | |
|---|---|---|---|
| 1. | Mäh- und Fördergerät | 19. | Innenseite |
| 2. | Schneid- und Fördereinrichtung | 20. | Schneidkante |
| 3. | Schneid- und Fördereinrichtung | 21. | Schneidenspitze |
| 4. | Schneid- und Fördereinrichtung | 22. | Schneidenbereich |
| 5. | Schneid- und Fördereinrichtung | 23. | Öffnung |
| 6. | Tragrahmen | 24. | Schneidlinie |
| 7. | Endlosförderer/Fördereinrichtung | 25. | Förderlinie |
| 8. | Blatt- und Pflanzenheber | 26. | Schneidengröße |
| 9. | Teilerspitze | 27. | Oberes Förderelement |
| 10. | Halter | 28. | Unteres Förderelement |
| 11. | Führungsbügel | 29. | Annahmeabschnitt |
| 12. | Förderelement | 30. | Förderabschnitt |
| 13. | Förder- und Führungsglied | | |
| 14. | Schneideinrichtung | U | - Förderu Umlaufrichtung |
| 15. | Schneidscheibe | S | - Schneidbereich |
| 16. | Abweiselement | Ü | - Übergabebereich |
| 17. | Halter | Q | - Querförderbereich |
| 18. | Schneide | F | - Fahrt- und Arbeitsrichtung |
| | | W | - Schneidenwinkel |

## Patentansprüche

1. Mäh- und Fördergerät zum Ernten von stängeligem Erntegut, umfassend eine Mehrzahl von rotierend ausgebildeten Schneideinrichtungen (14) und zumindest zwei Förderelemente (12) aufweisende Fördereinrichtungen (7), wobei die von Schneiden (18) der Schneideinrichtungen (14) im freien Schnitt abgetrennten Erntegutstängel durch die Fördereinrichtungen (7) einer Eintrittsöffnung einer Weiterverarbeitungseinrichtung, insbesondere eines Feldhäckslers, zuführbar sind, **dadurch gekennzeichnet, dass** die abzutrennenden Erntegutstängel während der Erntefahrt mit den rotierenden Schneiden (18) der Schneideinrichtungen (14) in Kontakt kommen, bevor sie von den Förderelementen (12) einer Fördereinrichtung (7) erfasst werden, wobei die Schneideinrichtungen (14) als Schneidscheiben (15) mit zumindest zwei gleichmäßig am Außenumfang verteilten, sichelförmigen Schneiden (18) ausgebildet sind, die nach innen zur Scheibenmitte hin konvex ausgeformt sind und in Drehrichtung der Schneidscheibe (15) weisend mit einer Spitze (21) auslaufen, wobei die Außenkontur der sichelförmigen Schneiden (18) bogenförmig angeformt ist und nicht dem Scheibenaußendurchmesser folgt.

2. Mäh- und Fördergerät (1) zum Ernten von stängeligem Erntegut nach Anspruch 1, **dadurch gekennzeichnet, dass** die Umlaufebene der rotierenden Schneiden (18) während der Erntefahrt zumindest annähernd parallel zum Erdboden ausgerichtet ist.

3. Mäh- und Fördergerät (1) zum Ernten von stängeligem Erntegut nach zumindest einem der vorhergehenden Ansprüche, **dadurch gekennzeichnet, dass** die sichelförmigen Schneiden (18) an ihrer zum Erdboden weisenden Unterseite einen derartigen Anschliff aufweisen, dass sich scharfe Schneidkanten (20) ergeben und die Schneiden (18) dadurch in Drehrichtung vorlaufend spitz auslaufen.

4. Mäh- und Fördergerät (1) zum Ernten von stängeligem Erntegut nach zumindest einem der vorhergehenden Ansprüche, **dadurch gekennzeichnet, dass** die rotierenden Schneideinrichtungen (14) quer zur Arbeitsrichtung nebeneinander angeordnet sind, wobei sich die Außenhüllkreise der Schneiden (18) so weit überdecken, dass diese eine durchgängige, nur leicht wellenförmige Schneidlinie (24) bilden.

5. Mäh- und Fördergerät (1) zum Ernten von stängeligem Erntegut nach zumindest einem der vorhergehenden Ansprüche, **dadurch gekennzeichnet, dass** die Fördereinrichtungen als umlaufende Endlosförderer (7) ausgebildete sind und das Erntegut in ihrer Haupterstreckung linear, quer zur Fahrtrichtung (F) abfördern.

6. Mäh- und Fördergerät (1) zum Ernten von stängeligem Erntegut nach zumindest einem der Ansprüche 1 bis 5, **dadurch gekennzeichnet, dass** die Fördereinrichtungen (7) als Fördertrommeln ausgebildet sind, welchen jeweils eine Schneideinrichtung (14) zugeordnet ist.

7. Mäh- und Fördergerät (1) zum Ernten von stängeligem Erntegut nach zumindest einem der vorhergehenden Ansprüche, **dadurch gekennzeichnet, dass** die Umlaufhüllbahnen der Förderelemente (12) der Fördereinrichtungen (7) in Fahrt- und Arbeitsrichtung F hinter der Schneidlinie (24) der Schneideinrichtungen (14) liegt.

8. Mäh- und Fördergerät (1) zum Ernten von stängeligem Erntegut nach zumindest einem der vorhergehenden Ansprüche, **dadurch gekennzeichnet, dass** feststehende Abweiselemente (16) die Bereiche der wellenförmigen Schneidlinie (24), in denen sich die Außenhüllkreise der Schneideinrichtungen (14) schneiden nach vorne in Arbeitsrichtung abdecken.

9. Mäh- und Fördergerät (1) zum Ernten von stängeligem Erntegut nach zumindest einem der vorhergehenden Ansprüche, **dadurch gekennzeichnet, dass** die rotierenden Schneideinrichtungen (14) zumindest teilweise an ihrer Unterseite nach unten vorstehende Bereiche aufweisen.

10. Mäh- und Fördergerät (1) zum Ernten von stängeligem Erntegut nach zumindest einem der vorhergehenden Ansprüche, **dadurch gekennzeichnet, dass** die Schneidscheiben (15) einen äußeren Schneidenbereich (26) mit zumindest zwei, jedoch vorteilhaft mehreren sichelförmigen Schneiden (18) und einen radial zur Scheibenmitte hin daran anschließenden, zumindest ringförmigen geschlossenen Bereich aufweisen.

11. Mäh- und Fördergerät (1) zum Ernten von stängeligem Erntegut nach Anspruch 10, **dadurch gekennzeichnet, dass** die Schneidscheiben (15) radial zur Scheibenmitte hin an den ringförmigen geschlossenen Bereich anschließend einen Bereich mit Durchbrüchen aufweisen.

12. Mäh- und Fördergerät (1) zum Ernten von stängeligem Erntegut nach zumindest einem der vorhergehenden Ansprüche, **dadurch gekennzeichnet, dass** zumindest die einer Fördereinrichtung (7) zugeordneten Schneidscheiben (15) überschneidend mit einem Höhenversatz zueinander angeordnet sind.

13. Mäh- und Fördergerät (1) zum Ernten von stängeligem Erntegut nach Anspruch 13, **dadurch gekennzeichnet, dass** die Schneidscheiben (15) an einem gemeinsamen Getriebebalken antriebsverbunden angeordnet sind.

14. Mäh- und Fördergerät (1) zum Ernten von stängeligem Erntegut nach zumindest einem der vorhergehenden Ansprüche, **dadurch gekennzeichnet, dass** die Förderelemente (12) der Fördereinrichtungen (7) zumindest teilweise einen Annahmeabschnitt (29) und einen Förderabschnitt (30) aufweisen.

## Claims

1. A mowing and conveying device for harvesting crops with stalks, comprising a plurality of rotating cutting devices (14) and at least two conveying devices (7) having conveying elements (12), wherein the stalks of the crops, separated by free cutting by blades (18) of the cutting devices (14), can be conveyed by the conveying devices (7) to an inlet opening of a device for further processing, in particular a forage harvester, **characterised in that** the stalks of the crops to be cut off come into contact during harvesting with the rotating blades (18) of the cutting devices (14) before they are captured by the conveying elements (12) of a conveying device (7), wherein the cutting devices (14) are designed as cutting discs (15) having at least two crescent-shaped blades (18) which are evenly distributed on the outer circumference, and having an inwardly convex shape toward the centre of the disc, and running to a point (21) facing in the direction of rotation of the disc (15), wherein the outer contour of the crescent-shaped blades (18) is moulded in an arc shape and does not follow the disc outer diameter.

2. The mowing and conveying device (1) for harvesting crops with stalks, according to claim 1, **characterised in that** the orbital plane of the rotating blades (18) is oriented during harvesting at least approximately parallel to the ground.

3. The mowing and conveying device (1) for harvesting crops with stalks, according to at least one of the preceding claims, **characterised in that** the crescent-shaped blades (18) have a particular bevel on their underside facing the ground which results in sharp cutting edges (20) and in the blades (18) running to a point in the direction of rotation.

4. The mowing and conveying device (1) for harvesting crops with stalks, according to at least one of the preceding claims, **characterised in that** the rotating cutting devices (14) are arranged side by side perpendicular to the working direction, wherein the outer circumscribed circles of the blades (18) overlap enough that they form a continuous, only slightly wave-like cutting line (24).

5. The mowing and conveying device (1) for harvesting crops with stalks, according to at least one of the preceding claims, **characterised in that** the conveying devices are designed as revolving endless conveying devices (7), and convey the crop linearly, perpendicular to the direction of travel (F), in their main extension direction.

6. The mowing and conveying device (1) for harvesting crops with stalks, according to at least one of the claims 1 to 5, **characterised in that** the conveying devices (7) are designed as conveyor drums, to each of which is assigned one cutting device (14).

7. The mowing and conveying device (1) for harvesting crops with stalks, according to at least one of the preceding claims, **characterised in that** the rotational circumscribed paths of the conveying elements (12) of the conveying devices (7) lie behind the cutting line (24) of the cutting devices (14) in the travel and working direction (F).

8. The mowing and conveying device (1) for harvesting crops with stalks, according to at least one of the preceding claims, **characterised in that** fixed deflector elements (16) cover, toward the front in the working direction, the areas of the wave-like cutting line (24) in which the outer circumscribed circles of the cutting devices (14) intersect.

9. The mowing and conveying device (1) for harvesting crops with stalks, according to at least one of the preceding claims, **characterised in that** the rotating cutting devices (14) have regions on their underside which project at least partially downward.

10. The mowing and conveying device (1) for harvesting crops with stalks, according to at least one of the preceding claims, **characterised in that** the cutting discs (15) comprise an outer blade region (26) having at least two, but advantageously a plurality of crescent-shaped blades (18), and comprise a closed, at least annular region adjacent thereto radially toward the centre of the disc.

11. The mowing and conveying device (1) for harvesting crops with stalks, according to claim 10, **characterised in that** the cutting discs (15) comprise a region which has openings, said region being radially adjacent, toward the centre of the disc, to the closed, annular region.

12. The mowing and conveying device (1) for harvesting crops with stalks, according to at least one of the preceding claims, **characterised in that** at least the cutting discs (15) which are assigned to a conveying device (7) are arranged overlapping each other, with a height offset relative to each other.

13. The mowing and conveying device (1) for harvesting crops with stalks, according to claim 13, **characterised in that** the cutting discs (15) are arranged on a shared transmission bar, connected to the drive.

14. The mowing and conveying device (1) for harvesting crops with stalks, according to at least one of the preceding claims, **characterised in that** the conveying elements (12) of the conveying devices (7) have, at least in sections thereof, a receiving segment (29) and a conveying segment (30).

## Revendications

1. Appareil de fauchage et de convoyage destiné à la récolte de produits en tiges comprenant un ensemble de dispositifs de coupe rotatifs (14) et au moins deux dispositifs de convoyage (7) comprenant des éléments convoyeurs (12), les tiges de produits de récolte tranchées en tronçons libres par des lames (18) des dispositifs de coupe (14) pouvant être transférés par les dispositifs de convoyage (7) vers une ouverture d'entrée d'un dispositif de traitement ultérieur, en particulier une ramasseuse hacheuse,
**caractérisé en ce que**
pendant leur déplacement les tiges de produits de récolte à trancher viennent en contact avec les lames rotatives (18) des dispositifs de coupe (14) avant d'être saisis par les éléments convoyeurs (12) d'un dispositif de convoyage (7), les dispositifs de coupe (14) étant réalisés sous la forme de disques de coupe (15) équipés d'au moins deux lames (18) en forme de faucille uniformément réparties sur leur périphérie externe, qui présentent une convexité dirigée vers l'intérieur vers le centre des disques et s'étendent avec une pointe (21) dirigée dans la direction de rotation du disque de coupe (15), le contour externe des lames (18) en forme de faucille étant en forme d'arc, et ne suivant pas le diamètre externe du disque.

2. Appareil de fauchage et de convoyage (1) destiné à la récolte de produits en tiges conforme à la revendication 1,
**caractérisé en ce que**
le plan orbital des lames rotatives (18) est orienté au moins essentiellement parallèlement au sol pendant le déplacement de récoltes.

3. Appareil de fauchage et de convoyage (1) destiné à la récolte de produits en tiges conforme à au moins l'une des revendications précédentes,
**caractérisé en ce que**
les lames (18) en forme de faucille comportent, sur leur côté inférieur tourné vers le sol un biseau permettant d'obtenir des arêtes de coupe (20) aigues et les lames (18) s'étendent ainsi en pointe en avançant dans la direction de rotation.

4. Appareil de fauchage et de convoyage (1) destiné à la récolte de produits en tiges conforme à au moins l'une des revendications précédentes,
**caractérisé en ce que**
les dispositifs de coupe rotatifs (14) sont disposés côte à côte transversalement à la direction de travail, et les enveloppes externes des lames (18) se chevauchant de façon à former une ligne de coupe continue seulement faiblement ondulée (24).

5. Appareil de fauchage et de convoyage (1) destiné à la récolte de produits en tiges conforme à au moins l'une des revendications précédentes,
**caractérisé en ce que**
les dispositifs de convoyage sont réalisés sous la forme de convoyeurs rotatifs sans fin (7) et évacuent les produits de récolte linéairement dans leur extension principale, transversalement à la direction de déplacement (F).

6. Appareil de fauchage et de convoyage (1) destiné à la récolte de produits en tiges conforme à au moins l'une des revendications 1 à 5,
**caractérisé en ce que**
les dispositifs de convoyage (7) sont réalisés sous la forme de tambours de convoyage auxquels est respectivement associé un dispositif de coupe (14).

7. Appareil de fauchage et de convoyage (1) destiné à la récolte de produits en tiges conforme à au moins l'une des revendications précédentes,
**caractérisé en ce que**
les chemins de circulation des éléments convoyeurs (12) des dispositifs de convoyage (7) sont situées à l'arrière de la ligne de coupe (24) des dispositifs de coupe (14) dans la direction de déplacement et de travail F.

8. Appareil de fauchage et de convoyage (1) destiné à la récolte de produits en tiges conforme à au moins l'une des revendications précédentes,
**caractérisé en ce que**
des éléments déflecteurs (16) fixes recouvrent vers l'avant dans la direction de travail, les zones de la ligne de coupe ondulée (24) dans lesquelles les enveloppes externes des dispositifs de coupe (14) s'intersectent.

9. Appareil de fauchage et de convoyage (1) destiné à la récolte de produits en tiges conforme à au moins l'une des revendications précédentes,
**caractérisé en ce que**
les dispositifs de coupe rotatifs (14) comportent des zones au moins partiellement en saillie vers le bas sur leur face inférieure.

10. Appareil de fauchage et de convoyage (1) destiné à la récolte de produits en tiges conforme à au moins l'une des revendications précédentes,
**caractérisé en ce que**
les disques de coupe (15) comportent une zone de coupe externe (26) ayant au moins deux, mais toutefois, de préférence, plusieurs lames en forme de faucille (18) et une zone au moins annulaire fermée qui s'y connecte radialement vers le centre des disques.

11. Appareil de fauchage et de convoyage (1) destiné à la récolte de produits en tiges conforme à la revendication 10,
**caractérisé en ce que**
les disques de coupe (15) comportent une zone munie de perçages se raccordant à la zone annulaire fermée radialement vers le centre des disques.

12. Appareil de fauchage et de convoyage (1) destiné à la récolte de produits en tiges conforme à au moins l'une des revendications précédentes,
**caractérisé en ce qu'**
au moins les disques de coupe (15) associés à un dispositif de convoyage (7) s'intersectent avec un décalage en hauteur.

13. Appareil de fauchage et de convoyage (1) destiné à la récolte de produits en tiges conforme à la revendication 13,
**caractérisé en ce que**
les entrainements des disques de coupe (15) sont reliés sur une poutre de transmission commune.

14. Appareil de fauchage et de convoyage (1) destiné à la récolte de produits en tiges conforme à au moins l'une des revendications précédentes,
**caractérisé en ce que**
les éléments convoyeurs (12) des dispositifs de convoyage (7) comportent au moins partiellement un segment de réception (29) et un segment de convoyage (30).
